# FASCICULE DE BREVET EUROPEEN

(11) **EP 2 753 595 B1**
(45) Date de publication et mention de la délivrance du brevet: **18.05.2016**
(21) Numéro de dépôt: 12762345.2
(22) Date de dépôt: 31.08.2012
(51) Int. Cl.: C04B 41/89, F01D 5/28

(54) **PROCÉDÉ DE FORMATION SUR UN SUBSTRAT EN MATERIAU COMPOSITE A MATRICE CÉRAMIQUE CONTENANT DU SIC D'UN REVÊTEMENT LISSE D'ASPECT GLACÉ ET PIÈCE EN MATÉRIAU COMPOSITE A MATRICE CÉRAMIQUE MUNIE D'UN TEL REVÊTEMENT**
VERFAHREN ZUR HERSTELLUNG EINER GLATTEN GLASURARTIGEN BESCHICHTUNG AUF EINEM SUBSTRAT AUS VERBUNDWERKSTOFF MIT KERAMISCHER MATRIX MIT SIC UND TEIL AUS VERBUNDWERKSTOFF MIT KERAMISCHER MATRIX MIT EINER SOLCHEN BESCHICHTUNG
METHOD FOR FORMING A SMOOTH GLAZE-LIKE COATING ON A SUBSTRATE MADE OF A CERAMIC MATRIX COMPOSITE MATERIAL CONTAINING SIC, AND PART MADE OF A CERAMIC MATRIX COMPOSITE MATERIAL PROVIDED WITH SUCH A COATING

(30) Priorité: 06.09.2011 FR 1157890
(43) Date de publication de la demande: 16.07.2014
(73) Titulaire: HERAKLES, 33185 Le Haillan (FR); Centre National de la Recherche Scientifique, 75016 Paris (FR)
(72) Inventeur: DISS, Pascal, F-33185 Le Haillan (FR); MONTAGNE, Lionel, F-62840 Laventie (FR); PEREZ-VILLAR, Sofia, CH-5330 Badzurzach (CH)
(74) Mandataire: Desormiere, Pierre-Louis
(86) Numéro de dépôt international: PCT/FR2012/051964
(87) Numéro de publication internationale: WO 2013/034838

(56) Documents cités:
- WO-A1-2010/112768

## Description

### Arrière-plan de l'invention

L'invention concerne la formation d'un revêtement ayant une surface extérieure lisse d'aspect glacé sur un substrat en matériau composite à matrice céramique (CMC) contenant du carbure de silicium (SiC).

L'invention est applicable notamment à des pièces utilisées dans des turbomachines, plus particulièrement des pièces exposées en service à des températures élevées telles que, par exemple, des aubes ou distributeurs de turbine ou des éléments d'arrière-corps de turbomoteurs aéronautiques.

La recherche de rendement plus élevé et d'émissions polluantes plus réduites conduit à envisager, pour des turbomachines, des températures de fonctionnement plus hautes. L'utilisation de matériau CMC à la place d'alliages métalliques a donc été préconisée pour réaliser des pièces de parties chaudes de turbomachines. En effet, les matériaux CMC sont remarquables par leurs propriétés mécaniques qui les rendent aptes à former des pièces structurales et par leur capacité à conserver ces propriétés à des températures élevées. En outre, par rapport à des alliages métalliques, les matériaux CMC ont une masse volumique moindre donc permettent des économies de masse.

Les matériaux CMC sont formés par un renfort fibreux en fibres réfractaires (carbone ou céramique) densifié par une matrice céramique. Les matériaux CMC ici visés sont ceux à matrice céramique contenant du SiC, en particulier ceux dont la matrice céramique est formée principalement de SiC. Des exemples typiques de tels matériaux CMC sont les matériaux C-SiC (renfort en fibres de carbone et matrice SiC), les matériaux SiC-SiC et les matériaux à matrice mixte ou séquencée par exemple des matériaux à matrice mixte C/SiC ou des matériaux à matrice formée de phases SiC alternant avec des phases en carbone pyrolytique (PyC) ou en carbure de bore (B₄C) ou en un système ternaire Si-B-C.

Les matériaux CMC présentent cependant un aspect de surface ondulé et relativement rugueux qui peut s'avérer incompatible avec les performances aérodynamiques requises pour des pièces de turbomachines. L'ondulation de surface est due au renfort fibreux généralement tissé tandis que la rugosité est liée au mode d'obtention de la matrice, celle-ci étant généralement formée par infiltration chimique en phase gazeuse, ou CVI ("Chemical Vapour Infiltration").

Il a donc été proposé de munir des pièces en CMC d'un revêtement de lissage conférant aux pièces un aspect de surface lisse. Le document WO 2010/112 768 décrit la formation d'un tel revêtement de lissage sous forme d'un verre essentiellement constitué de silice (SiO₂), alumine (Al₂O₃), baryte (BaO) et chaux (CaO) et ayant une température de fusion supérieure ou égale à 1300°C.

La formation de revêtement de protection vitreux sur un matériau contenant du SiC a été décrite dans d'autres documents.

Ainsi, dans un article de M. Ferraris et al, "Glass coating for SiCf/SiC composites for high-temperature application, Acta Mater. 48 (2000), p. 4721-4724", il est décrit la formation d'un revêtement en un verre essentiellement de type borosilicate (70,4 % SiO₂, 2,1 % Al₂O₃, 17,5 % B₂O₃, 10 % BaO, en % massique) sur un substrat en composite SiC/SiC. Pour éviter la présence de bulles dans le revêtement vitreux, la température à laquelle le verre fondu est nappé sur le substrat est portée jusque environ 1300°C, la viscosité du verre étant alors suffisamment basse pour faciliter le dégazage.

Dans un article de F. Qian-Gang et al, "Oxidation protective glass coating for SiC coated carbon/carbon composites for application at 1773K, Mat. Lett. 60 (2006), p. 431-434", est étudié un revêtement de protection anti-oxydation en un verre essentiellement de type borosilicate (72-82 % SiO₂, 2-5 % Al₂O₃, 8-15 % B₂O₃, 1-3 % Li₂O, 2-5 % Y₂O₃, en % massique). Les images au microscope électronique à balayage montrent une surface de revêtement avec des trous.

L'article de Cheng et al, "Effect of glass sealing on the oxidation behavior of three-dimensional C/SiC composites in air", Carbon 39 (2001), p. 1127-1133 décrit quant à lui l'utilisation d'un verre borosilicate (55-60 mol% SiO₂ et 40-45 mol% B₂O₃) pour former un revêtement de protection auto-cicatrisant sur un composite C-SiC. La température d'auto-cicatrisation est comprise entre 700°C et 900°C, c'est-à-dire la température à laquelle le ramollissement du verre permet le colmatage de fissures présentes dans le revêtement.

Il existe un besoin pour un procédé permettant de former sur un matériau CMC contenant du SiC un revêtement présentant une surface lisse, et avantageusement d'aspect glacé, et étant exempt de défauts, tels que la présence de bulles et de trous. Outre les propriétés thermodynamiques mentionnées plus haut, un tel revêtement présente l'avantage de permettre une détection aisée d'un endommagement même minime par un impact.

### Objet et résumé de l'invention

L'invention a pour but de fournir un tel procédé et propose à cet effet un procédé de formation d'un revêtement ayant une surface extérieure lisse d'aspect glacé sur un substrat en matériau composite à matrice céramique contenant du carbure de silicium, procédé comprenant :
- le dépôt sur une surface du substrat d'une pâte de ciment réfractaire formée d'une poudre principalement constituée de silice et d'alumine et mélangée à un liquide, la pâte de ciment comblant les parties en creux du relief de la surface pour réduire les irrégularités de celle-ci et recouvrant toute la surface du substrat,
- la réalisation d'un traitement thermique pour durcir le ciment après prise de celui-ci et obtenir une première couche de revêtement en ciment réfractaire,
- le dépôt sur la première couche de revêtement d'une barbotine formée d'une fritte de verre en suspension dans un liquide, la fritte de verre étant constituée principalement de poudre de silice, d'oxyde de bore, d'alumine et d'au moins un oxyde de métal alcalin, et
- la réalisation d'un traitement thermique de nappage par ramollissement et étalement du verre pour obtenir une deuxième couche de revêtement formant une glaçure recouvrant la première couche de revêtement,
- la composition de la fritte de verre étant choisie pour former un verre ayant une température de fusion inférieure à 1100°C et une température de transition vitreuse inférieure à 750°C.

Un tel procédé est remarquable par les points suivants :
- la première couche de ciment réfractaire constitue une barrière de réaction entre le verre et le SiC du substrat. Une réaction chimique entre le verre et le SiC à la température de nappage du verre est ainsi évitée, cette réaction chimique, par le dégagement gazeux provoqué, étant la source de défauts (bulles, trous) constatés dans l'art antérieur,
- le choix d'une composition de verre autorisant son nappage à une température inférieure à 1100°C évite de porter le matériau CMC à une température à laquelle les propriétés mécaniques des fibres formant le renfort fibreux peuvent être affectées, et
- le choix d'une composition de verre ayant une température de transition vitreuse inférieure à 750°C permet de conférer au revêtement une capacité d'auto-cicatrisation dès cette température.

Avantageusement, un colorant est ajouté à la barbotine comprenant la fritte de verre. Outre des considérations d'ordre cosmétique, selon sa nature, l'ajout d'un colorant peut apporter des avantages particuliers :
- faciliter la détection d'endommagement même minime, notamment par impact, par un simple examen visuel, et
- conférer des propriétés de discrétion, notamment par atténuation de signature infrarouge.

Selon une particularité du procédé, le liquide de la pâte de ciment est choisi parmi : une solution de silicate de sodium, une solution d'acide phosphorique et une solution de monophosphate d'aluminium AI(H₂PO₄)₃.

Selon une autre particularité du procédé, l'on forme une première couche de revêtement en ciment réfractaire ayant une épaisseur minimale au moins égale à 60 µm.

Avantageusement, la fritte de verre est constituée de poudre de granulométrie inférieure à 40 µm.

Dans un mode particulier de réalisation, la composition de la fritte de verre, en pourcentage molaire, est :
55 % à 65% SiO₂
10 % à 25 % B₂O₃
7% à 15 % Al₂O₃
1 % à 12 % d'au moins un oxyde de métal alcalin
1 % à 20 % d'au moins un oxyde choisi parmi ZrO₂, TiO₂, V₂O₅, ZnO, CaO, MgO, BaO.

Avantageusement, la deuxième couche de revêtement formant glaçure a une épaisseur au moins égale à 100 µm.

Selon un autre de ses aspects, l'invention vise une pièce comprenant un substrat en CMC contenant du SiC et muni d'un revêtement tel qu'il peut être obtenu par le procédé ci-dessus.

Une telle pièce est caractérisée en ce que le revêtement est formé :
- d'une première couche de revêtement au contact de la surface du substrat, la première couche de revêtement étant en un ciment réfractaire constitué essentiellement de silice et d'alumine et comblant les parties en creux du relief de la surface pour réduire les irrégularités de celle-ci, et
- d'une deuxième couche de revêtement formant une glaçure en un verre constitué principalement d'oxydes de silicium, de bore, d'aluminium et d'au moins un métal alcalin, le verre ayant une température de fusion inférieure à 1100°C et une température de transition vitreuse inférieure à 750°C.

Avantageusement, la glaçure contient en outre un colorant.

Avantageusement, la première couche de revêtement en ciment réfractaire a une épaisseur minimale au moins égale à 60 µm.

Avantageusement, encore, la deuxième couche de revêtement formant une glaçure a une épaisseur au moins égale à 100 µm.

Selon un mode particulier de réalisation, la composition du verre de la glaçure en pourcentage molaire, est :
55 % à 65% SiO₂
10 % à 25 % B₂O₃
7 % à 15 % Al₂O₃
1 % à 12 % d'au moins un oxyde de métal alcalin
1 % à 20 % d'au moins un oxyde choisi parmi ZrO₂, TiO₂, V₂O₅, ZnO, CaO, MgO, BaO.

### Brève description des dessins

L'invention sera mieux comprise à la lecture de la description faite ci-après, à titre indicatif mais non limitatif. Il y sera fait référence aux dessins annexés, sur lesquels :
- la figure 1 est une vue très schématique illustrant le principe de réalisation d'un revêtement sur une pièce en CMC contenant du SiC, selon l'invention ;
- la figure 2 indique des étapes successives d'un mode de mise en oeuvre d'un procédé selon l'invention ; et
- les figures 3 à 5 sont des photographies montrant l'aspect du revêtement obtenu selon plusieurs exemples de mise en oeuvre de l'invention.

### Description détaillée de modes de réalisation

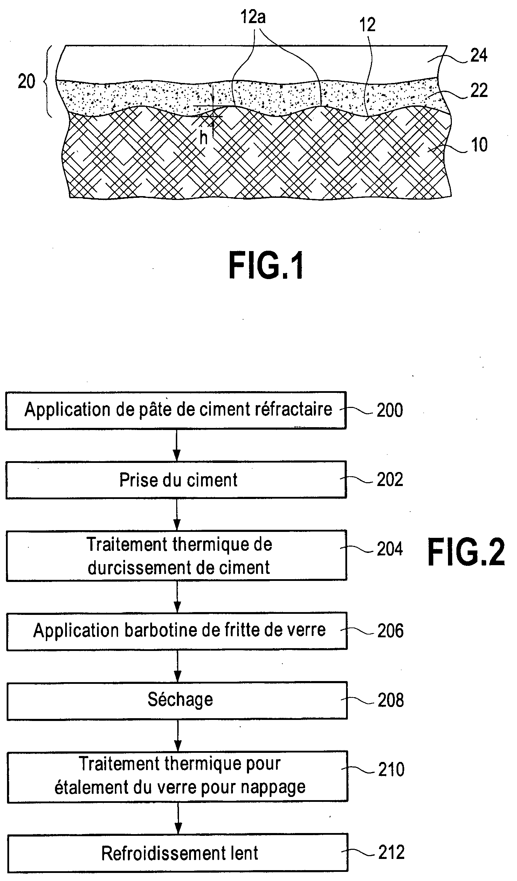

La figure 1 montre très schématiquement, en coupe, un substrat 10 muni sur une surface 12 d'un revêtement 20.

Le substrat 10 est en CMC comprenant un renfort fibreux densifié par une matrice au moins partiellement formée de SiC. Les fibres du renfort peuvent être en carbone ou céramique. Des fibres en céramique peuvent être en SiC ou en oxyde, par exemple en alumine. La matrice peut être une matrice SiC ou une matrice mixte C-SiC ou une matrice séquencée comprenant des phases en SiC alternant avec des phases en PyC, B₄C ou Si-B-C. Des procédés de fabrication de tels matériaux CMC à matrice au moins partiellement formée de SiC sont bien connus. Pour une pièce à fabriquer de forme donnée, une préforme fibreuse ayant une forme correspondant à celle de la pièce est réalisée et la préforme est densifiée par CVI et/ou par voie liquide, c'est-à-dire par un ou plusieurs cycles comprenant une imprégnation par une composition liquide contenant un polymère précurseur de céramique, suivie par la réticulation et la pyrolyse du précurseur. On pourra se référer notamment aux documents US 5 738 908, US 5 079 039, US 5 246 736 et US 5 965 266.

La préforme fibreuse formant le renfort du CMC peut être obtenue à partir de divers procédés textiles, notamment par drapage de strates fibreuses tissées ou par tissage tridimensionnel ou multicouches. La présence des fils se traduit à la surface 12 du substrat 10 par des ondulations 12a dont la hauteur h est typiquement de plusieurs centaines de microns. En outre, le substrat présente une rugosité de surface due à la porosité résiduelle de la matrice quel que soit son mode d'obtention, cette rugosité ayant une valeur (variation de niveau de surface) de quelques microns, couramment de 5 à 10 microns.

Le revêtement 20 comprend une première couche de revêtement 22 en ciment réfractaire déposée directement sur la surface 12 du substrat 10 et une deuxième couche de revêtement 24 en verre formant une glaçure et définissant la surface extérieure du revêtement 20. Dans l'exemple illustré, la glaçure 24 est déposée directement sur la première couche 22, mais l'introduction de couches intermédiaires à des fins d'adaptation des coefficients de dilatation est également possible.

La première couche 22 a une fonction d'atténuation des irrégularités de la surface 12 du substrat 10 par comblement au moins partiel des creux formés par les ondulations 12a et de la rugosité de la surface 12. La première couche 22 a en outre une fonction de barrière de réaction pour éviter une réaction chimique entre le verre de la glaçure 24 et le SiC du substrat 10. En effet, sans la présence de la première couche 22, une telle réaction pourrait se produire, en particulier aux températures élevées requises pour assurer un nappage par le verre de la glaçure 24, avec dégagement d'espèces gazeuses pouvant provoquer l'inclusion de bulles ou la formation de trous dans la glaçure 24. La première couche 22 recouvre complètement la surface 12 du substrat et son épaisseur minimale est de préférence au moins égale à 60 microns; typiquement comprise entre 100 microns et 300 microns.

La glaçure 24 a pour fonction de former une surface extérieure lisse d'aspect glacé. La glaçure 24 contribue également à une atténuation supplémentaire des irrégularités de surface, notamment de la rugosité. L'épaisseur de la glaçure est de préférence supérieure à 100 microns, typiquement comprise entre 100 microns et 400 microns. En effet, une épaisseur trop faible peut être insuffisante pour combler efficacement la rugosité résiduelle tandis qu'une épaisseur trop forte peut favoriser l'apparition de craquelures.

Le revêtement 20 peut être obtenu de la façon suivante (figure 2).

Une première étape 200 consiste à appliquer une pâte de ciment réfractaire sur la surface 12 du revêtement 10. La pâte de ciment est obtenue par mélange de poudre et d'un liquide. La poudre est avantageusement formée majoritairement de silice SiO₂ et d'alumine Al₂O₃, la composition de la poudre étant de préférence la suivante (en pourcentage molaire) :
75 % à 90 % SiO₂
10 % à 25 % Al₂O₃

Le liquide est une solution par exemple de silicate de sodium avec un rapport molaire SiO₂/NaO₂ compris de préférence entre 1 et 2. D'autres solutions peuvent être utilisées, par exemple une solution d'acide phosphorique ou de monophosphate d'aluminium (Al(H₂PO₄)₃).

La pâte de ciment est préparée par mélange du véhicule liquide et de la poudre avec une proportion massique liquide/poudre comprise par exemple entre 1 et 2.

Des adjuvants de type organique à caractère plastifiant ou superplastifiant peuvent être ajoutés pour rendre la pâte de ciment plus fluide, par exemple des mélamines ou des sels sulfonés de polycondensés de naphtalène et de formaldéhyde.

L'application de la pâte de ciment sur la surface 12 est réalisée par tout moyen classique connu, par exemple à la spatule, à la brosse ou au pistolet.

Après prise du ciment au bout de plusieurs heures à température ambiante à l'air libre (étape 202), un traitement thermique de durcissement du ciment est réalisé (étape 204). Le traitement thermique est réalisé par exemple à une température comprise entre 400°C et 600°C pendant une à plusieurs heures. On obtient un ciment réfractaire essentiellement constitué des phases SiO₂ et Al₂O₃, ainsi que NaAlSiO₄ lorsque le liquide utilisé pour la pâte de ciment est une solution d'un composé du sodium tel que du silicate de sodium.

La quantité de pâte de ciment appliquée est choisie pour avoir, après traitement thermique, l'épaisseur de couche de ciment réfractaire souhaitée.

L'étape suivante (206) consiste à appliquer sur la couche de ciment réfractaire une barbotine formée par une fritte de verre en suspension dans un liquide. Le liquide est avantageusement de l'eau, d'autres liquides pouvant être toutefois utilisés, par exemple une solution d'ethylcellulose à 10% dans du terpinéol. La fritte de verre est obtenue par broyage de verre dont la composition est choisie pour réaliser une glaçure ayant les propriétés souhaitées, notamment :
- une température de transition vitreuse de préférence inférieure à 750°C, par exemple comprise entre 600°C et 650°C, la température de transition vitreuse étant celle à partir de laquelle une auto-cicatrisation de la glaçure peut être obtenue par ramollissement du verre qui la constitue,
- une température de nappage de préférence inférieure à 1100°C, la température de nappage étant la température à laquelle la fritte de verre doit être portée pour parvenir à une viscosité suffisamment faible permettant son étalement avec une épaisseur sensiblement uniforme, une température de nappage de 1100°C ou plus pouvant affecter les propriétés mécaniques des fibres du renfort fibreux du substrat en CMC,
- un coefficient de dilatation thermique de préférence voisin de celui du substrat en CMC contenant SiC, par exemple compris entre 4.10⁻⁶K⁻¹ et 5.10⁻⁶K⁻¹, et
- une bonne durabilité chimique, notamment une bonne tenue à l'humidité.

La composition de la fritte de verre, qui est également celle du verre de la glaçure obtenue ensuite, est par exemple la suivante (en pourcentage molaire), à savoir celle d'un verre essentiellement de type alumino-borosilicate :
55 % à 65% siO₂
10 % à 25 % B₂O₃
7% à 15% Al₂O₃
1 % à 12 % d'au moins un oxyde de métal alcalin
1 % à 20 % d'au moins un oxyde choisi parmi ZrO₂, TiO₂, V₂O₅, ZnO, CaO, MgO, BaO.

Un agent de coloration est éventuellement ajouté pour donner à la glaçure une teinte désirée. Divers agents de coloration connus peuvent être utilisés, par exemple du "bleu de cobalt", du "noir de cobalt" ou de l'oxyde de cuivre CuO (coloration verte).

On pourra utiliser un verre disponible dans le commerce ou réaliser un verre par mélange et fusion de ses constituants dans les proportions voulues.

Le broyage du verre est réalisé pour avoir une fritte de verre avec une granulométrie inférieure à 100 microns, de préférence inférieure à 40 microns.

L'application de la barbotine est réalisée par tout moyen classique connu, par exemple à la spatule.

Après séchage (étape 208) pour élimination du liquide, la température est. élevée progressivement pour provoquer un ramollissement et un étalement (nappage) du verre avec un palier à la température de nappage du verre (étape 210). La température de nappage est fonction de la composition du verre, laquelle est choisie pour avoir une température de fusion inférieure à 1100°C, par exemple comprise entre 1000°C et 1100°C.

Un refroidissement de préférence lent (étape 212) est ensuite effectué pour figer la glaçure avec le moins possible de contraintes résiduelles. La quantité de fritte de verre déposée est choisie pour avoir, en final, l'épaisseur de glaçure désirée. On obtient alors un revêtement ayant une surface lisse, d'aspect brillant et éventuellement coloré. Dans le cas de pièces en CMC destinées à être utilisées dans des turbomachines, un tel revêtement confère de bonnes propriétés aérodynamiques tout en permettant une détection aisée de défauts, dus par exemple à des impacts, par simple inspection visuelle. En outre, la coloration peut être utilisée pour conférer des propriétés particulières, notamment une signature infrarouge atténuée.

Des exemples de réalisation de revêtements selon l'invention seront maintenant décrits. Dans tous les exemples, le substrat est en CMC de type SiC/SiC avec un renfort en fils de fibres SiC tissés par tissage multi-couches et une matrice SiC obtenue par CVI.

### Exemple 1

Une pâte de ciment réfractaire a été préparée en mélangeant une poudre formée par un mélange de SiO₂ et Al₂O₃, avec un rapport molaire SiO₂/Al₂O₃ égal à environ 1/8, avec un liquide constitué d'une solution de silicate de sodium avec un rapport molaire SiO_{2/}Na₂O égal à environ 3/2. La proportion massique liquide/poudre était d'environ 1,5.

La pâte de ciment a été appliquée à la spatule sur une surface du substrat, l'épaisseur ayant été choisie pour obtenir une couche de ciment réfractaire finale d'épaisseur minimale égale à 100 microns environ.

L'ensemble substrat/pâte de ciment a été laissé à l'air à température ambiante pendant 24 h environ pour assurer la prise du ciment.

Un traitement thermique a ensuite été effectué à 600°C environ sous air, et pendant 2 h environ.

Une fritte de verre a été obtenue par broyage d'un verre ayant la composition suivante, en pourcentage molaire, hors éventuelles impuretés :
56 % environ SiO₂
21 % environ B₂O₃
11 % environ Al₂O₃
5 % environ CaO
5 % environ BaO et
2 % environ K₂O

Le broyage a été réalisé pour avoir une granulométrie inférieure à 40 microns environ.

Une barbotine formée par la fritte de verre en suspension dans de l'eau distillée a été étalée à la spatule sur la couche de revêtement en ciment réfractaire, la quantité de fritte de verre apportée ayant été choisie pour obtenir une épaisseur finale de glaçure de 300 microns environ.

Après séchage, la température a été élevée progressivement jusqu'à 1000°C environ et y a été maintenue pendant 15 min environ pour assurer un étalement sensiblement uniforme du verre.

Après refroidissement lent sous air, un revêtement a été obtenu qui présente une surface extérieure lisse, brillante et exempte d'ondulations.

### Exemple 2

Il a été procédé comme dans l'exemple 1 mais avec une fritte de verre ayant la composition suivante, en pourcentage molaire, hors éventuelles impuretés :
62 % environ SiO₂
12 % environ B₂O₃
4 % environ Al₂O₃
6 % environ ZnO
7 % environ CaO
5 % environ NaKO
4 % environ ZrO₂

En outre, pour le traitement thermique de nappage de la couche de ciment réfractaire par la glaçure, le substrat muni de la couche de ciment réfractaire et de la fritte de verre a été introduit directement dans un four à 1000°C avec maintien à cette température pendant 15 min environ et refroidissement lent contrôlé à -2°K.min⁻¹ environ.

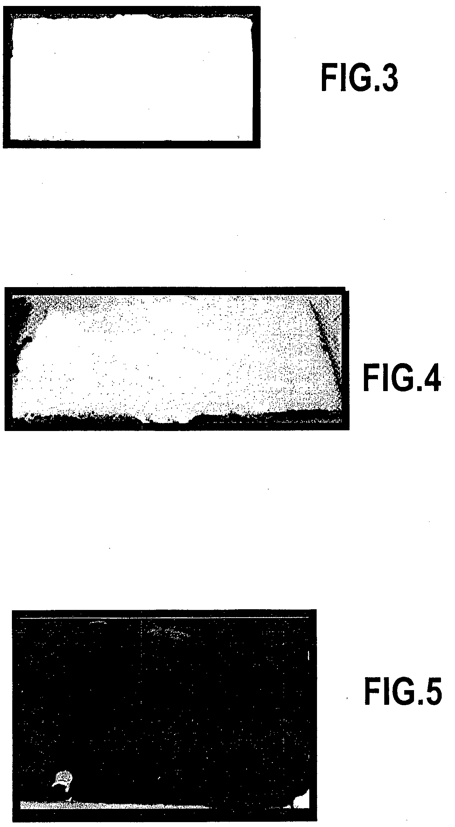

La figure 3 montre la surface de la couche de ciment réfractaire avant application de la glaçure et la figure 4 montre la surface de la glaçure. On constate que les ondulations de surface encore visibles à la surface de la couche de ciment réfractaire ont pratiquement disparu après application de la glaçure. L'observation au microscope électronique à balayage montre une amplitude d'ondulation moyenne de 16 microns environ à comparer avec une valeur de 355 microns mesurée sur le substrat de départ.

La durabilité chimique du verre a été testée par la méthode du Soxhelt qui permet de simuler la lixiviation du verre, en utilisant de l'eau à la température de 100°C en circuit fermé selon la norme 150 16797 : 2004. Après 800 h, la perte de masse mesurée n'a été que de 0,8 % en valeur relative.

### Exemple 3

Il a été procédé comme dans l'exemple 2 mais en ajoutant du bleu de cobalt à la barbotine dans une proportion massique de 5 % par rapport à la masse de barbotine constituée par la fritte de verre et l'eau.

On a obtenu un revêtement de couleur bleue ayant une surface extérieure lisse d'aspect glacé.

### Exemple 4

Il a été procédé comme dans l'exemple 3 mais en remplaçant le bleu de cobalt par du noir de cobalt.

La figure 5 montre le revêtement obtenu de couleur noire ayant une surface extérieure lisse et d'aspect glacé.

## Revendications

1. Procédé de formation d'un revêtement ayant une surface extérieure lisse d'aspect glacé sur un substrat en matériau composite à matrice céramique contenant du carbure de silicium, **caractérisé en ce qu'**il comprend :
- le dépôt sur une surface du substrat d'une pâte de ciment réfractaire formée d'une poudre principalement constituée de silice et d'alumine et mélangée à un liquide, la pâte de ciment comblant les parties en creux du relief de la surface pour réduire les irrégularités de celle-ci et recouvrant toute la surface du substrat,
- la réalisation d'un traitement thermique pour durcir le ciment après prise de celui-ci et obtenir une première couche de revêtement en ciment réfractaire,
- le dépôt sur la première couche de revêtement d'une barbotine formée d'une fritte de verre en suspension dans un liquide, la fritte de verre étant constituée principalement de poudre de silice, d'oxyde de bore, d'alumine et d'au moins un oxyde de métal alcalin, et
- la réalisation d'un traitement thermique de nappage par ramollissement et étalement du verre pour obtenir une deuxième couche de revêtement formant une glaçure recouvrant la première couche de revêtement,
- la composition de la fritte de verre étant choisie pour former un verre ayant une température de fusion inférieure à 1100°C et une température de transition vitreuse inférieure à 750°C.

2. Procédé selon la revendication 1, **caractérisé en ce qu'**un colorant est ajouté à la barbotine.

3. Procédé selon l'une quelconque des revendications 1 et 2, **caractérisé en ce que** le liquide de la pâte de ciment est choisi parmi : une solution de silicate de sodium, ou une solution d'acide phosphorique ou de monophosphate d'aluminium (AI(H₂PO₄)₃).

4. Procédé selon l'une quelconque des revendications 1 et 3, **caractérisé en ce que** l'on forme une première couche de revêtement en ciment réfractaire ayant une épaisseur minimale au moins égale à 60 µm.

5. Procédé selon l'une quelconque des revendications 1 à 4, **caractérisé en ce que** la fritte de verre est constituée de poudre de granulométrie inférieure à 40 µm.

6. Procédé selon l'une quelconque des revendications 1 à 5, **caractérisé en ce que** la composition de la fritte de verre, en pourcentage molaire, est
55 % à 65% SiO₂
10 % à 25 % B₂O₃
7 % à 15 % Al₂O₃
1 % à 12 % d'au moins un oxyde de métal alcalin
1 % à 20 % d'au moins un oxyde choisi parmi ZrO₂, TiO₂, V₂O₅, ZnO, CaO, MgO, BaO.

7. Procédé selon l'une quelconque des revendications 1 à 6, **caractérisé en ce que** la deuxième couche de revêtement formant glaçure a une épaisseur au moins égale à 100 µm.

8. Pièce comprenant un substrat en matériau composite à matrice céramique contenant du carbure de silicium muni sur une surface d'un revêtement ayant une surface extérieure lisse d'aspect glacé, **caractérisée en ce que** le revêtement est formé :
- d'une première couche de revêtement au contact de la surface du substrat, la première couche de revêtement étant en un ciment réfractaire constitué essentiellement de silice et d'alumine et comblant les parties en creux du relief de la surface pour réduire les irrégularités de celle-ci, et
- d'une deuxième couche de revêtement formant une glaçure en un verre constitué principalement d'oxydes de silicium, de bore, d'aluminium et d'au moins un métal alcalin, le verre ayant une température de fusion inférieure à 1100°C et une température de transition vitreuse inférieure à 750°C.

9. Pièce selon la revendication 8, **caractérisée en ce que** la glaçure contient en outre un colorant.

10. Pièce selon l'une quelconque des revendications 8 et 9, **caractérisée en ce que** la première couche de revêtement en ciment réfractaire a une épaisseur minimale au moins égale à 60 µm.

11. Pièce selon l'une quelconque des revendications 8 à 10, **caractérisée en ce que** la deuxième couche de revêtement formant une glaçure a une épaisseur au moins égale à 100µm.

12. Pièce selon l'une quelconque des revendications 8 à 11, **caractérisée en ce que** la composition du verre de la glaçure en pourcentage molaire, est :
55 % à 65% SiO₂
10 % à 25 % B₂O₃
7% à 15% Al₂O₃
1 % à 12 % d'au moins un oxyde de métal alcalin
1 % à 20 % d'au moins un oxyde choisi parmi ZrO₂, TiO₂, V₂O₅, ZnO, CaO, MgO, BaO.

## Patentansprüche

1. Verfahren zur Ausbildung einer Beschichtung mit einer glatten Außenfläche mit glasiertem Aussehen auf einem Substrat aus Verbundwerkstoff mit Siliziumkarbid-haltiger Keramikmatrix, **dadurch gekennzeichnet, dass** es umfasst:
- das Abscheiden einer Paste aus feuerfestem Zement, die von einem hauptsächlich aus Siliziumdioxid und Aluminiumoxid bestehenden und mit einer Flüssigkeit gemischten Pulver gebildet ist, auf einer Oberfläche des Substrats, wobei die Zementpaste die vertieften Teile des Reliefs der Oberfläche ausfüllt, um deren Unregelmäßigkeiten zu reduzieren, und die gesamte Oberfläche des Substrats bedeckt,
- das Durchführen einer Wärmebehandlung, um den Zement nach dessen Abbinden zu härten und um eine erste Beschichtungslage aus feuerfestem Zement zu erhalten,
- das Abscheiden eines Schlickers, der von einer in einer Flüssigkeit suspendierten Glasfritte gebildet ist, auf der ersten Beschichtungslage, wobei die Glasfritte hauptsächlich von Pulver aus Siliziumdioxid, aus Boroxid, aus Aluminiumoxid und von wenigstens einem Alkalimetalloxid gebildet ist, und
- das Durchführen einer Überziehwärmebehandlung durch Erweichen und Auftragen des Glases, um eine zweite Beschichtungslage, die eine die erste Beschichtungslage bedeckende Glasur bildet, zu erhalten,
- wobei die Zusammensetzung der Glasfritte gewählt ist, um ein Glas, das eine Schmelztemperatur von unter 1100 °C und eine Glasübergangstemperatur von unter 750 °C aufweist, zu bilden.

2. Verfahren nach Anspruch 1, **dadurch gekennzeichnet, dass** dem Schlicker ein Farbstoff zugegeben wird.

3. Verfahren nach einem der Ansprüche 1 und 2, **dadurch gekennzeichnet, dass** die Flüssigkeit der Zementpaste aus einer Natriumsilikat-Lösung oder einer Phosphorsäure- oder Aluminiummonophosphat-Lösung (Al(H₂PO₄)₃) ausgewählt ist.

4. Verfahren nach einem der Ansprüche 1 und 3, **dadurch gekennzeichnet, dass** eine erste Beschichtungslage aus feuerfestem Zement, die eine Mindestdicke von wenigstens gleich 60 µm aufweist, gebildet wird.

5. Verfahren nach einem der Ansprüche 1 bis 4, **dadurch gekennzeichnet, dass** die Glasfritte von Pulver mit einer Korngröße von weniger als 40 µm gebildet ist.

6. Verfahren nach einem der Ansprüche 1 bis 5, **dadurch gekennzeichnet, dass** die Zusammensetzung der Glasfritte, in Molprozent, folgende ist 55 % bis 65 % SiO₂
10 % bis 25 % B₂O₃
7 % bis 15 % Al₂O₃
1 % bis 12 % wenigstens eines Alkalimetalloxids
1% bis 20 % wenigstens eines Oxids, das aus ZrO₂, TiO₂, V₂O₅, ZnO, CaO, MgO, BaO ausgewählt ist.

7. Verfahren nach einem der Ansprüche 1 bis 6, **dadurch gekennzeichnet, dass** die eine Glasur bildende zweite Beschichtungslage eine Dicke von wenigstens gleich 100 µm aufweist.

8. Teil, umfassend ein Substrat aus Verbundwerkstoff mit Siliziumkarbid-haltiger Keramikmatrix, das auf einer Oberfläche mit einer Beschichtung, die eine glatte Außenfläche mit glasiertem Aussehen aufweist, versehen ist, **dadurch gekennzeichnet, dass** die Beschichtung gebildet ist:
- von einer ersten Beschichtungslage in Kontakt mit der Oberfläche des Substrats, wobei die erste Beschichtungslage aus einem feuerfesten Zement besteht, der im Wesentlichen von Siliziumdioxid und von Aluminiumoxid gebildet ist und die vertieften Teile des Reliefs der Oberfläche ausfüllt, um deren Unregelmäßigkeiten zu reduzieren, und
- von einer zweiten Beschichtungslage, die eine Glasur aus einem Glas, welches hauptsächlich aus Silizium-, Bor-, Aluminiumoxiden und aus wenigstens einem Alkalimetall besteht, bildet, wobei das Glas eine Schmelztemperatur von unter 1100 °C und eine Glasübergangstemperatur von unter 750 °C aufweist.

9. Teil nach Anspruch 8, **dadurch gekennzeichnet, dass** die Glasur ferner einen Farbstoff enthält.

10. Teil nach einem der Ansprüche 8 und 9, **dadurch gekennzeichnet, dass** die erste Beschichtungslage aus feuerfestem Zement eine Mindestdicke von wenigstens gleich 60 µm aufweist.

11. Teil nach einem der Ansprüche 8 bis 10, **dadurch gekennzeichnet, dass** die eine Glasur bildende zweite Beschichtungslage eine Dicke von wenigstens gleich 100 µm aufweist.

12. Teil nach einem der Ansprüche 8 bis 11, **dadurch gekennzeichnet, dass** die Zusammensetzung des Glases der Glasur, in Molprozent, folgende ist:
55 % bis 65 % SiO₂
10 % bis 25 % B₂O₃
7% bis 15 % Al₂O₃
1 % bis 12 % wenigstens eines Alkalimetalloxids
1% bis 20 % wenigstens eines Oxids, das aus ZrO₂, TiO₂, V₂O₅, ZnO, CaO, MgO, BaO ausgewählt ist.

## Claims

1. A method of forming a coating having a smooth outside surface of glazed appearance on a substrate of ceramic matrix composite material containing silicon carbide, the method being **characterized in that** it comprises:
depositing a refractory cement paste on a surface of the substrate, the paste being formed by a powder mainly constituted by silica and alumina and mixed with a liquid, the cement paste filling in the hollow portions in relief of the surface in order to reduce its irregularities and covering the entire surface of the substrate;
performing heat treatment to harden the cement after it has set so as to obtain a first coating layer of refractory cement;
depositing a slip on the first coating layer, the slip being formed of a glass frit in suspension in a liquid, the glass frit being mainly constituted by a powder of silica, boron oxide, alumina, and at least one alkali metal oxide; and
performing heat treatment for glazing by softening and spreading the glass in order to obtain a second coating layer forming a glaze covering the first coating layer;
the composition of the glass frit being selected to form a glass having a melting temperature lower than 1100°C and a glass transition temperature lower than 750°C.

2. A method according to claim 1, **characterized in that** a coloring agent is added to the slip.

3. A method according to claim 1 or claim 2, **characterized in that** the liquid of the cement paste is selected from: a solution of sodium silicate; a solution of phosphoric acid; and a solution of aluminum monophosphate (Al(H₂PO₄)₃).

4. A method according to any one of claims 1 to 3, **characterized in that** a first coating layer of refractory cement is formed having a minimum thickness of not less than 60 µm.

5. A method according to any one of claims 1 to 4, **characterized in that** the glass frit is constituted by powder having a grain size of less than 40 µm.

6. A method according to any one of claims 1 to 5, **characterized in that** the composition of the glass frit, in molar percentages, is as follows:
55% to 65% SiO₂
10% to 25% B₂O₃
7% to 15% Al₂O₃
1% to 12% of at least one alkali metal oxide
1% to 20% of at least one oxide selected from ZrO₂, TiO₂, V₂O₅, ZnO, CaO, MgO, and BaO.

7. A method according to any one of claims 1 to 6, **characterized in that** the second coating layer forming a glaze has thickness of not less than 100 µm.

8. A part comprising a substrate of ceramic matrix composite material containing silicon carbide that is provided on a surface with a coating having a smooth outside surface of glazed appearance, the part being **characterized in that** the coating is formed:
of a first coating layer in contact with the surface of the substrate, the first coating layer being made of a refractory cement essentially constituted of silica and of alumina and filling in the hollow portions in relief of the surface in order to reduce its irregularity; and
a second coating layer forming a glaze of glass constituted mainly of oxides of silicon, of boron, of aluminum, and of at least one alkali metal, the glass having a melting temperature lower than 1100°C and a glass transition temperature lower than 750°C.

9. A part according to claim 8, **characterized in that** the glaze also contains a coloring agent.

10. A part according to claim 8 or claim 9, **characterized in that** the first coating layer of refractory cement has a minimum thickness of not less than 60 µm.

11. A part according to any one of claims 8 to 10, **characterized in that** the second coating layer forming a glaze has a thickness of not less than 100 µm.

12. A part according to any one of claims 8 to 11, **characterized in that** the composition of the glass of the glaze in molar percentages is as follows:
55% to 65% SiO₂
10% to 25% B₂O₃
7% to 15% Al₂O₃
1% to 12% of at least one alkali metal oxide
1% to 20% of at least one oxide selected from ZrO₂, TiO₂, V₂O₅, ZnO, CaO, MgO, and BaO.
